# EUROPEAN PATENT APPLICATION

(11) **EP 1 942 062 A1**
(43) Date of publication of application: **09.07.2008**
(21) Application number: 06783000.0
(22) Date of filing: 24.08.2006
(51) Int. Cl.: B65D 30/24, B65D 33/01, B65D 85/16

(54) **DEAERATION VALVE FOR COMPRESSION BAG AND COMPRESSION BAG WITH DEAERATION VALVE**

(30) Priority: 28.09.2005 WO PCT/JP2005/001780; 31.05.2006 US 443209
(71) Applicant: Compac Japan Ltd., Kashihara-shi, Nara 634-0008 (JP); Kawai, Osamu, Nara 632-0053 (JP)
(72) Inventor: TANAKA, Kazuya, Kashihara-shi Nara 634-0008 (JP)
(74) Representative: Waldren, Robin Michael
(86) International application number: PCT/JP2006/316596
(87) International publication number: WO 2007/037081

(57) **Abstract**

A deaeration valve for a compression bag comprising a base (2), a cover (3), and a valve element body (4). A deaeration port (22) allowing the inside of the compression bag to communicate with the outside is formed in the base (2). A cover side through hole (32) led to the inside of the cover (3) are formed in the upper surface of the cover (3). The valve body (4) is sucked toward the deaeration port (22) by a negative pressure in the compression bag to close the deaeration port (22). A pressing portion (33) protruding to press the valve body (4) is formed on the lower surface of the cover (3). A valve body housing chamber (S) is defined by the sidewall (24) and the diaphragm (21) of the base (2) and the lower end of the pressing portion (33) of the cover (3). At least part of the valve body (4) is disposed in the valve body housing chamber (S) in such a free state that it is not fixed to the base (2) or the cover (3) nor is not forced by an elastic member so that the valve body is vertically movable in the valve body housing chamber (S).

## Description

### TECHNICAL FIELD

The present invention relates to a deaeration valve for a compression bag to be used by discharging air in the bag, and a compression bag equipped with the deaeration valve.

### BACKGROUND ART

Patent Reference 1: Japanese Laid-Open Utility Model Publication No. H5-44837

Conventionally, there is a compression bag that can store a bulky item containing air thereinside, for example, clothes or bedding, and can be compressed by discharging air in the bag, thereby storing the item compactly.

The compression bag is used to insert/take out the item to be stored, and includes an opening portion capable of closing the inside of the bag into an airtight state by a fastener or the like. In addition, many compression bags are equipped with a deaeration valve having an airflow path for discharging air in the bag.

In use of the compression bag, a suction port of the vacuum cleaner is connected to the deaeration valve in order to discharge air in the bag by suction.

As an example of the deaeration valve, "a deaeration valve for a bag to store bedding or the like" has been described in Patent Reference 1. This includes a base that is fixed integrally with a compression bag and communicates the inside and outside of the bag through an airflow path, and a cover arranged to be freely screwed onto the base.

The valve body is formed on the base. The valve body includes a packing formed of rubber or the like and serves to enable the airflow path formed in the cover to be freely opened and closed when the cover is loosened against the base.

More specifically, only when the suction is done by the vacuum cleaner as described above, the valve body is forced to close the airflow path by a forcing means such as a spring, and the airflow path is opened and air in the bag is discharged outside. Finally, the cover is screwed onto the base so that the valve body can be fixed in a closed state and the inside of the compression bag can be kept in a deaerated state.

Since the valve body is forced by a forcing means in the conventional deaeration valve, there is a problem that quick deaeration cannot be done because of a time lag in the movement of the valve body even when suction is being done by the vacuum cleaner. There is another problem that the valve requires many components such as a forcing means and a packing.

In consideration of the problems, it is an object of the present invention to provide a deaeration valve for a compression bag and a compression bag equipped with the deaeration valve that has a comparatively simple structure. It is another object of the present invention to provide a deaeration valve for a compression bag and a compression bag equipped with a deaeration valve through which quick deaeration can be done.

### DISCLOSURE OF THE INVENTION

In order to achieve the objects, an aspect of the invention set forth in claim 1 provides a deaeration valve for a compression bag, comprising a base 2 having a screw portion 24a and serving as a deaeration port of a compression bag B in attachment to a through hole provided on the compression bag B, a cover 3 screwed onto the screw portion 24a and thus attached to an upper side of the base 2, and a valve body 4 formed separately from the base 2 and the cover 3. The base 2 is provided with a diaphragm 21 for blocking the inside and outside of the compression bag B, and the diaphragm 21 is provided with a deaeration port 22 for communicating the the inside and outside of the compression bag B. The cover 3 has a corresponding portion 31a on the upper surface 31 to abut on a suction port N of the vacuum cleaner, and the corresponding portion 31a includes a cover side through hole 32 communicating with an inner part of the cover 3 in an area encircled by a peripheral edge of the suction port N when the suction port N of the vacuum cleaner is pressed. The valve body 4 has at least a part thereof disposed in a valve body housing chamber S encircled by the diaphragm 21 of the base 2 and the cover 3. The valve body 4 is capable of being sucked toward the deaeration port 22 by a negative pressure in the compression bag B to close the deaeration port 22 from an upper side. When the cover 3 is loosened and moves upward, the valve body 4 is sucked toward the cover side by suction of the vacuum cleaner then releasing from the deaeration port 22. When the cover 3 is fastened and moves downward, the valve body 4 keeps the deaeration port 22 closed. The screw portion 24a is formed on a sidewall 24 provided to protrude upward in the base 2. A pressing portion 33 is provided on the lower surface of the cover 3 for pressing the valve body 4 while screwing the cover 3. The valve body housing chamber S is defined by the sidewall 24, the diaphragm 21 and a lower end of the pressing portion 33 of the cover 3. The valve body 4 has a part disposed in the valve body housing chamber S, when the valve body 4 is in such a free state that the valve body 4 is not fixed to the base 2 or the cover 3 nor is not forced by an elastic member. When the cover 3 is loosened, the part of the valve body 4 is vertically movable in the valve body housing chamber S, and the deaeration port 22 can be totally closed even when the valve body 4 horizontally moves.

An aspect of the invention set forth in claim 2 provides the deaeration valve for a compression bag set forth in claim 1, wherein, when the cover 3 is loosened, a vertical dimension of the valve body housing chamber S is at least smaller than the minimum dimension passing through the center of the valve body 4 among horizontal dimension of the valve body 4.

An aspect of the invention set forth in claim 3 provides the deaeration valve for a compression bag set forth in claim 1 or 2, wherein the deaeration valve is constituted by only the base 2, the cover 3 and the valve body 4.

An aspect of the invention set forth in claim 4 provides the deaeration valve for a compression bag set forth in claim 1 or 2, wherein a ventilation preventing wall 37 is provided in the circumferential direction outside the deaeration port 22 of the base 2 and the cover side through hole 32 of the cover 3, further, in the circumferential direction outside the sidewall 24 of the base 2 in a state in which the cover 3 is attached to the base 2.

An aspect of the invention set forth in claim 5 provides the deaeration valve for a compression bag set forth in claim 4, wherein the ventilation preventing wall 37 is provided to protrude downward from the lower surface of the cover 3, and its height from the lower surface of the cover 3 is set to be high not to disturb the closure of the deaeration valve 1 in screwing the cover 3 onto the base 2, and the ventilation preventing wall 37 is, in the circumferential direction on the cover 3, provided in a manner at least to intervene in the space where the cover side through hole 32 extends outward in the radial direction.

An aspect of the invention set forth in claim 6 provides the deaeration valve for a compression bag set forth in claim 1 or 2, wherein the pressing portion 33 of the cover 3 has a pressing ring 33a, and an upper end face 33a1 of the pressing ring 33a is positioned lower than the upper surface 31 of the cover 3. The cover side through hole 32 is comprised of a central side through hole 32a provided in the pressing ring 33a and a peripheral side through hole 32b provided outside seen on a plane of the pressing ring 33a. The central side through hole 32a and the peripheral side through hole 32b are positioned lower than the upper surface 31 of the cover 3, and the cover side through hole 32 has a continuous space 32c continuously provided above the pressing ring 33a.

An aspect of the invention set forth in claim 7 provides the deaeration valve for a compression bag set forth in claim 6, wherein the valve body 4 includes a protruding portion 41 that protrudes upward, and a valve body support portion 33b is provided on the pressing ring 33a of the cover 3, and the protruding portion 41 is disposed to be vertically movable in the valve body support portion 33b.

An aspect of the invention set forth in claim 8 provides a compression bag B in which a bag sheet B1 made of flexible resin is stuck to form a space that can be hermetically sealed thereinside, wherein the deaeration valve 1 for a compression bag set forth in any of claims 1 to 7 is attached to the bag sheet B1, so that air in the space can be discharged through a deaeration port 22 of a deaeration valve and the deaerated state can be kept.

An aspect of the invention set forth in claim 9 provides the compression bag set forth in claim 9, wherein an opening degree indicating portion 39 is provided on a surface of the cover 3 of the deaeration valve 1. An opening position display portion B4 is provided in a position of the bag sheet B1 where the portion B4 conforms to the the opening degree indicating portion 39 in an opened state of the deaeration valve 1, and a closing position display portion B5 is provided in a position where the portion B5 conforms to the opening degree indicating portion 39 in a closed state the deaeration valve 1.

### BRIEF DESCRIPTION OF THE DRAWINGS

Fig. 1 is a plan view showing a compression bag equipped with a deaeration valve according to an example.
Fig. 2 (A) is a plan view showing a base of the deaeration valve according to the example, Fig. 2 (B) is a cross sectional view taken in an A - A combination of Fig. 2 (A), and Fig. 2 (C) is a bottom view showing the same.
Fig. 3(A) is an enlarged plan view showing a principal part of a sidewall in the base of the deaeration valve according to the example, and Fig. 3(B) is an enlarged side view showing the principal part.
Fig. 4(A) is a plan view showing a base of a deaeration valve according to another embodiment, Fig. 4(B) is a cross sectional view taken in a B - B combination of Fig. 4(A), and Fig. 4(C) is a bottom view showing the same.
Fig. 5 (A) is a plan view showing a cover of the deaeration valve according to an example, Fig. 5(B) is a cross sectional view taken in a C - C combination of Fig. 5(A), and Fig. 5(C) is a bottom view showing the same.
Fig. 6 (A) is a plan view showing a cover of a deaeration valve according to a further embodiment, Fig. 6(B) is a cross sectional view taken in a D - D combination of Fig. 6(A), and Fig. 6(C) is a bottom view showing the same.
Fig. 7 (A) is a plan view showing a cover of a deaeration valve according to a further embodiment, Fig. 7(B) is a cross sectional view taken in an E - E combination of Fig. 7 (A), and Fig. 7(C) is a bottom view showing the same.
Fig. 8(A) is a plan view showing a cover of a deaeration valve according to a further embodiment, Fig. 8(B) is a cross sectional view taken in a G - G combination of Fig. 8(A), and Fig. 8(C) is a bottom view showing the same.
Fig. 9 is a perspective view showing a plane side, illustrating a cover of a deaeration valve according to a further embodiment.
Fig. 10 is a perspective view showing a bottom side, illustrating a cover of a deaeration valve according to a further embodiment.
Figs. 11(A) and 11(B) are perspective views showing a plane side, illustrating a valve body of a deaeration valve according to a further embodiment.
Fig. 12 (A) is a plan view showing a base of a deaeration valve according to a further embodiment, and Fig. 12(B) is a cross sectional view taken in an H - H combination of Fig. 12(A).
Fig. 13 (A) is a plan view showing a cover of a deaeration valve according to a further embodiment, and Fig. 13(B) is a cross sectional view taken in an I - I combination of Fig. 13 (A) .
Fig. 14(A) is a plan view showing a closed state of the deaeration valve according to an example, Fig. 14 (B) is a cross sectional view taken in a J - J combination of Fig. 14 (A), and Fig. 14(C) is an enlarged view showing a principal part of a K - K section of Fig. 14(B).
Fig. 15 (A) is a plan view showing an opened state of the deaeration valve according to the example, and Fig. 15(B) is a cross sectional view taken in an L - L combination of Fig. 15 (A) .

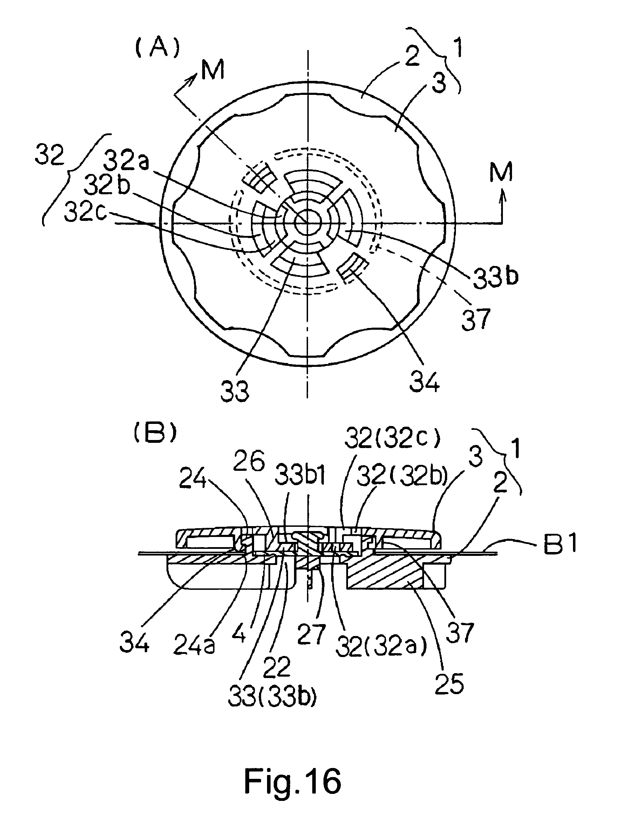

Fig. 16 (A) is a plan view showing a closed state of the deaeration valve according to a further embodiment, and Fig. 16 (B) is a cross sectional view taken in an M - M combination of Fig. 16 (A) .
Fig. 17 (A) is a plan view showing an opened state of the deaeration valve according to a further embodiment, and Fig. 17(B) is a cross sectional view taken in an O - O combination of Fig. 17 (A) .
Fig. 18 is a plan view showing a compression bag equipped with a deaeration valve according to the example, an open/close display being added to the bag.

### BEST MODE FOR CARRYING OUT THE INVENTION

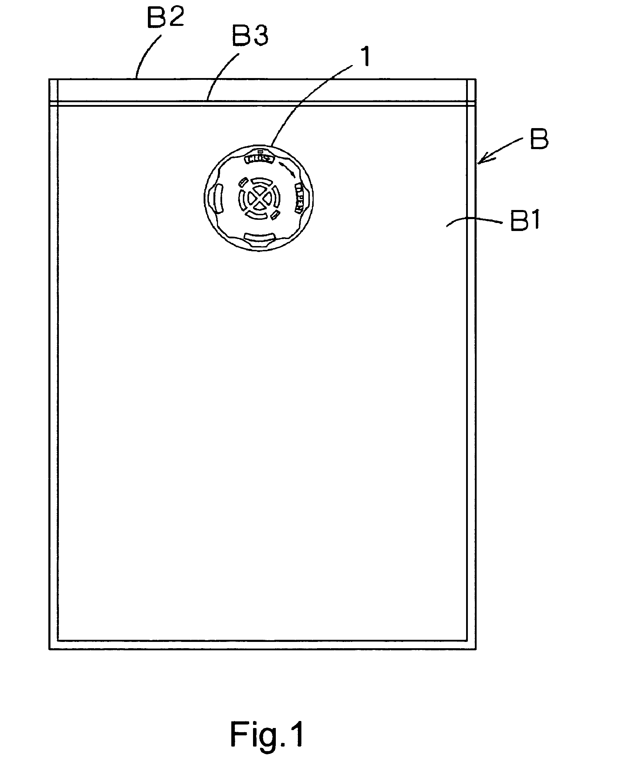

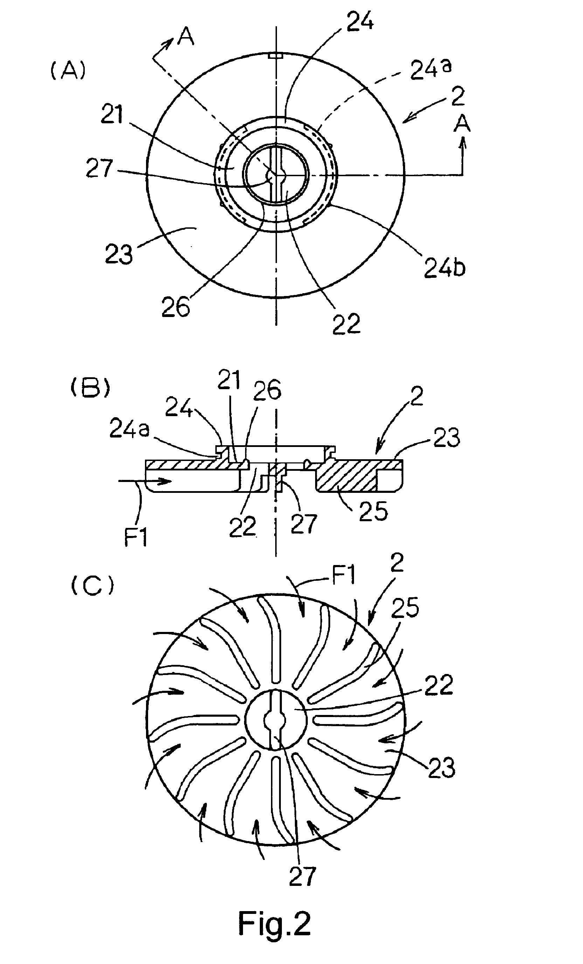

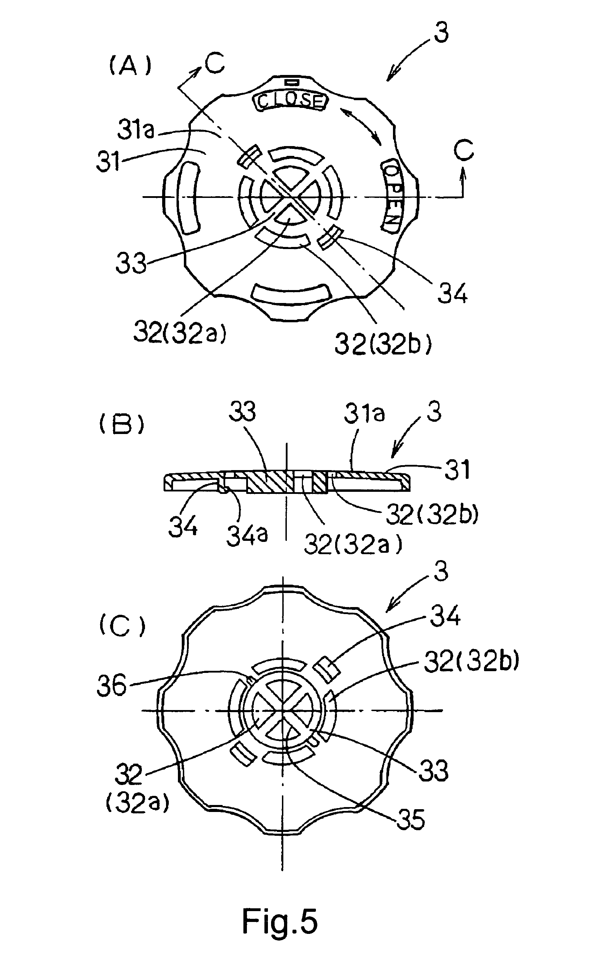

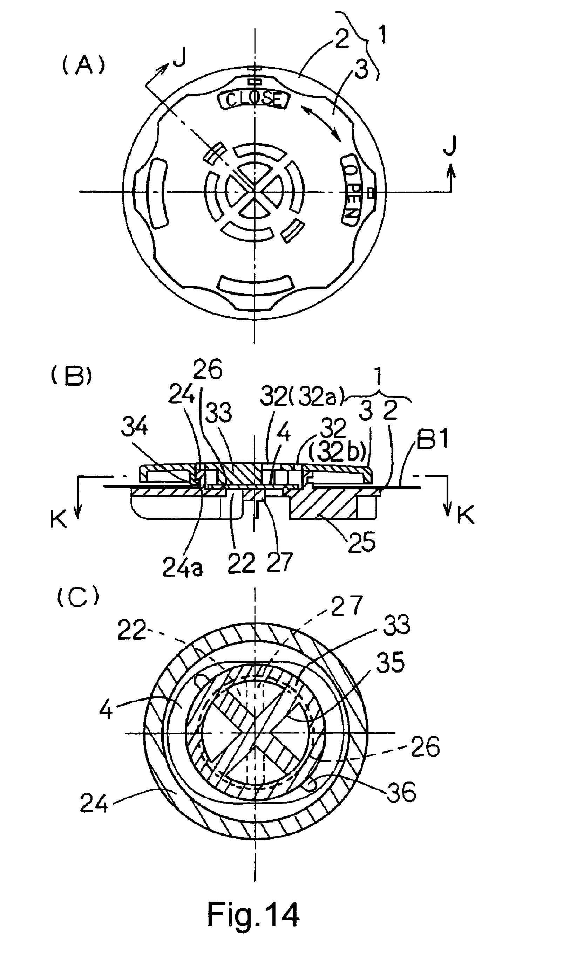

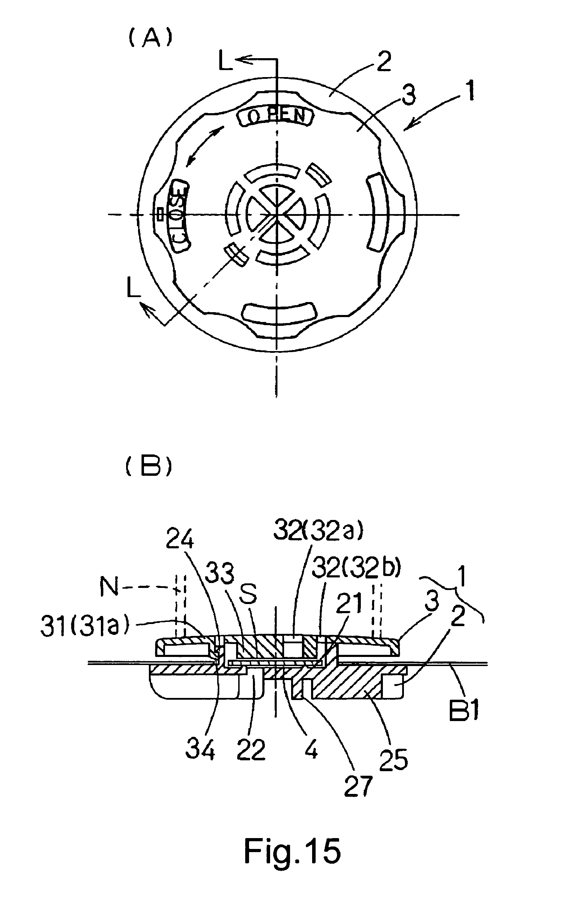

An example of an embodiment according to the present invention will be described below with reference to the drawings. Fig. 1 shows a compression bag to which a deaeration valve according to the example is attached, Fig. 2 shows a base of the deaeration valve according to the example, Fig. 5 shows a cover of the deaeration valve according to the example, and Figs. 14 and 15 show an opened and closed states of the deaeration valve according to the example.

As shown in Figs. 2 and 5 and other drawings, a deaeration valve 1 for a compression bag according to the example is constituted by a base 2 and a cover 3, both of which are formed separately, and a valve body 4. The number of components is lesser, and the structure is comparatively simpler than those in conventional deaeration valves. As shown in Fig. 1, a bag sheet B1 made of flexible resin is stuck, and the deaeration valve 1 is used in attachment to a compression bag B inside which a hermetically closable space is formed. In the following description, referring to an expression related to the positional relationship of the deaeration valve 1, an outward direction of the compression bag B is referred to as an "upper side" and an inward direction thereof is referred to as a "lower side" on the assumption that the deaeration valve 1 is horizontally used(see Fig. 14(B)).

The base 2 shown in Fig. 2 is attached to a through hole (not shown), which is previously provided on the compression bag B, and serves as a deaeration port of the compression bag B as shown in Fig. 1.

The base 2 has a flat attachment plate 23. In the example, the attachment plate 23 is disk-shaped but is not limited thereto, and various shapes such as an ellipse or a polygon can be taken.

As shown in Figs. 14(B) and 15(B), with the deaeration valve 1 attached to the bag sheet B1 constituting the compression bag B, an upper surface of the attachment plate 23 abuts on an internal surface of the bag sheet B1, and a part thereof is adhered to the bag sheet B1.

As shown in Figs. 2 (A) and 2 (B), the attachment plate 23 is provided with a cylindrical sidewall 24 that protrudes upward. In the example, the sidewall 24 takes an almost cylindrical shape. As described above, when the base 2 is to be attached to the compression bag B, the sidewall 24 penetrates the through hole formed on the bag sheet B1 as described above. Thus, a periphery of the through hole of the bag sheet B1 and the attachment plate 23 are adhered airtightly together.

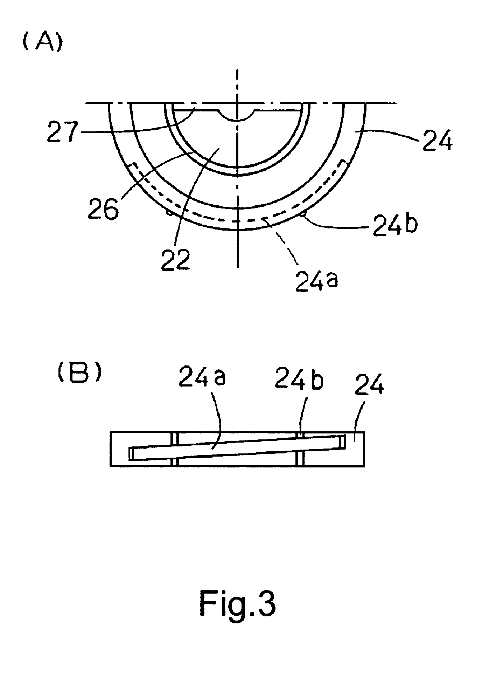

As shown in Figs. 2(B) and 3, the sidewall 24 according to the example has a screw portion 24a on an outer peripheral surface. This is not limited but the screw portion 24a may be provided on an inner peripheral surface or may be provided on both the outer and inner peripheral surfaces. The screw portion 24a according to the example is formed as an engaging groove 24a, which is inclined in the horizontal direction. A tip click portion 34a of a hook portion 34 of the cover 3 shown in Fig. 5 (B) is engaged with the engaging groove 24a, so that the base 2 and the cover 3 are integrated as shown in Figs. 14 and 15.

As shown in Fig. 2 (A), two engaging grooves 24a according to the example are provided every 180° with respect to the center of the attachment plate 23 as seen on a plane. Each of the engaging grooves 24a is formed within a range obtained by adding a size of the tip click portion 34a of the hook portion 34 to both ends within a range of 90° as seen on a plane, that is, in such a manner that the cover 3 can be rotated within a range of 90°. As shown in Fig. 3, a click projection 24b is provided on an outer peripheral surface of the sidewall 24 with the engaging groove 24a interposed therebetween. The click projection 24b is provided corresponding to a position where the cover 3 is loosened most (an opened position) and a position where the cover 3 is fastened most (a closed position), against the base 2. An internal surface of the hook portion 34 on the cover 3 moves over the click projection 24b so that the cover 3 can be fixed in the opened position and the closed position. The click projection 24b may be provided in the engaging groove 24a. In that case, a concave portion to be fitted with the click projection 24b may be formed on an internal surface of the tip click portion 34a of the cover 3 to fix the cover 3 by fitting of the concave portion and the click projection 24b.

In the example, the screw portion 24a, being a concave portion, is formed on the base 2 side, and the hook portion 34, being a convex portion, is formed on the cover 3 side. Meanwhile, the convex portion may be formed on the base 2 side, and the concave portion may be formed on the cover 3 side. They can be properly changed.

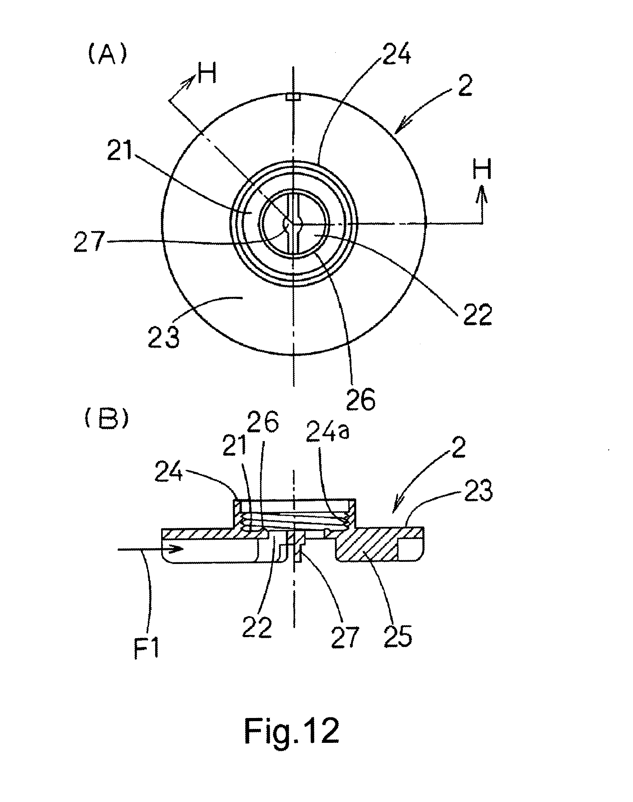

Fig. 12 shows an example of the base 2 having said screw portion 24a on the inner peripheral surface of the sidewall 24 as described above. As shown in Fig. 12 (B), the screw portion 24a, which is provided with a screw thread taking a sectional shape of a triangle, is wound spirally at 360° or more on the inner peripheral surface of the sidewall 24.

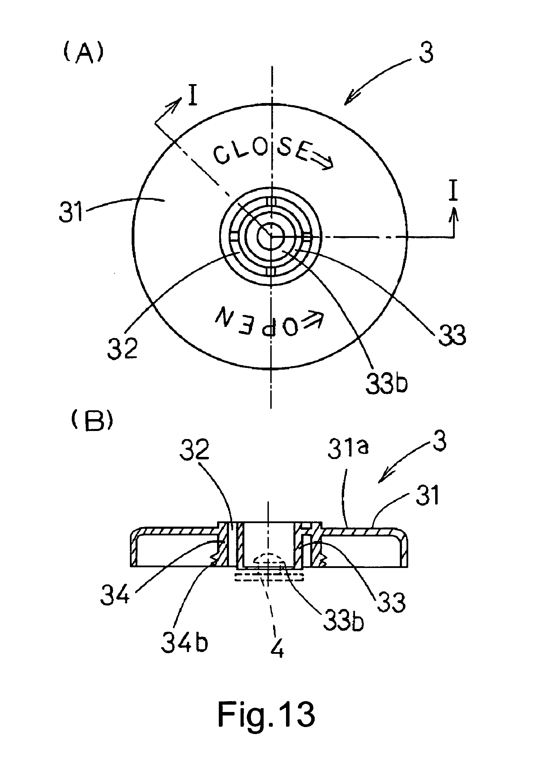

Fig. 13 shows an example of the cover 3 corresponding to the base 2. In this example, as shown in Fig. 13(B), a screw thread 34b is provided to be wound circularly at 360° or more on the tip side in the outer peripheral surface of the hook portion 34. The screw thread 34b corresponds to the tip click portion 34a in the example shown in Fig. 5, and can be screwed onto the screw portion 24a of the base 2 in this example.

In the example described herein, an inside screw is provided on the base 2 side and an outside screw is provided on the cover 3 side. It is also possible to employ a structure in which the outside screw is provided on the base 2 side and the inside screw is provided on the cover 3 side, and the hook portion 34 of the cover 3 is disposed outside the sidewall 24 of the base 2 in the circumferential direction.

Returning to the example shown in Fig. 2, description continues. An inner portion of the attachment plate 23 encircled by the sidewall 24 serves as a diaphragm 21. The diaphragm 21 is combined with the valve body 4 to be able to block the inside and outside of the compression bag B. Although an upper surface of the diaphragm 21 is flat in the example, it may be curved to take a shape such as a bowl. The diaphragm 21 is provided with a deaeration port 22 communicating the inside and outside of the compression bag B so as to enable ventilation. As described above, the attachment plate 23 of the base 2 is adhered airtightly to the bag sheet B1. In the deaeration valve 1, air passes only through the deaeration port 22.

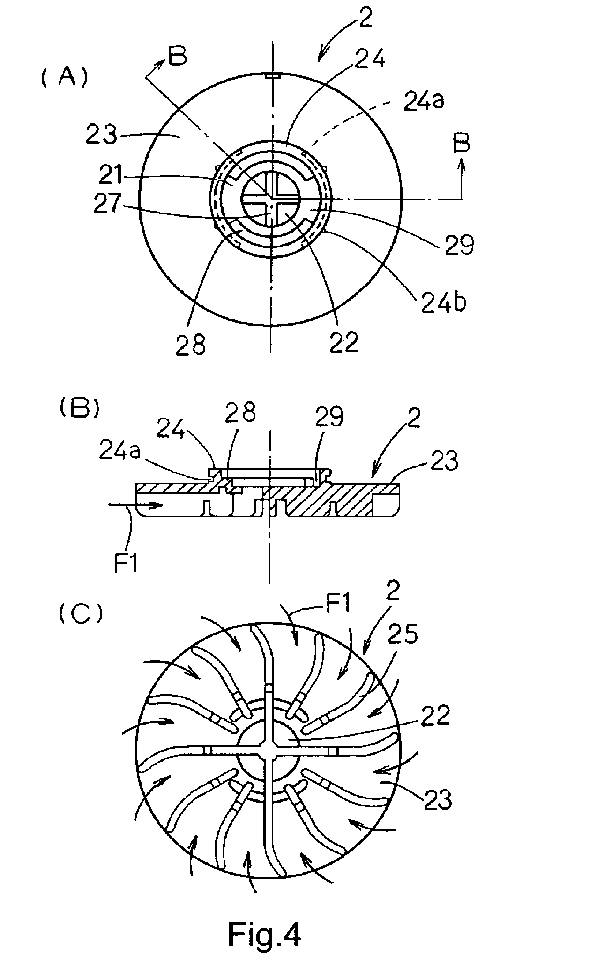

As shown in Figs. 2(A) and 2(C), the deaeration port 22 according to the example takes a circular shape seen on a plane which is provided at the center of the attachment plate 23 and the diaphragm 21. The hole is provided with a linear valve support portion 27 positioned on an extension in a part of a rectifying plate 25 formed radially on an underside of the attachment plate 23 to cross the hole, and the hole is divided into two parts every 180° as seen on a plane based on the center of the circle. The valve support portion 27 serves to support the valve body 4 from underneath. The shape of the deaeration port 22 is not limited to the example but may be divided into four parts every 90° as seen on a plane through the valve support portion 27 as shown in Figs. 4 (A) and 4 (C) . A large number of holes having small diameters may be disposed or the holes may take a shape of a slit extended in a radial direction or a circumferential direction and various shapes can be taken.

As shown in Fig. 2 (B), a convex rib 26 protruding upward is formed on the upper surface of the diaphragm 21 so as to encircle the deaeration port 22. In the example, the rib 26 is a projection having a width of 1 mm and a height of 0.3 mm, provided like an unbroken circle in the circumferential direction just outside the deaeration port 22. Since the rib 26 is provided, with a pressing portion 33 pressing the valve body 4 from above as shown in Fig. 14 (B), the rib 26 can press the valve body 4 from underneath. Consequently, the deaeration port 22 can be closed by the valve body 4 more reliably. As shown in Fig. 4, the rib 26 may be omitted.

A lower surface of the attachment plate 23 is provided with the rectifying plate 25 taking such a shape as to stand downward, extending radially from the center of the attachment plate 23 and gradually curving toward a certain circumferential direction as leaving from the center as shown in Fig. 2 (C). In the example, the rectifying plate 25 takes a shape of a plate that extends in the radial direction of the attachment plate 23 till the middle in an outward radial direction and curves gradually in the circumferential direction from the middle as shown in the drawings.

Since the rectifying plate 25 taking such a configuration is provided on the lower surface of the attachment plate 23, an airflow F1 in the direction of the attachment plate 23 in an airflow discharged from the inside of the compression bag 1 as shown in Fig. 2 (B) is guided to the deaeration port 22 with a turn along the rectifying plate 25 as shown in Fig. 2(C). Therefore, it is possible to carry out deaeration with comparatively low resistance. Because of the presence of the rectifying plate 25, it is possible to prevent a situation in which the bag sheet B1 positioned on the rear side of the deaeration valve 1 or an item stored in the bag is sucked so that the deaeration port 22 is closed from the inside of the bag to stop the on-going deaeration.

Next, the cover 3 will be described with reference to Fig. 5. An upper surface 31 of the cover 3 is flat or slightly curves, and at least part of the upper surface 31 serves as a corresponding portion 31a. The corresponding portion 31a abuts on a suction port N on a tip of a nozzle of the vacuum cleaner. In the corresponding portion 31a, when the suction port N is pressed, a cover side through hole 32 penetrating in a vertical direction is provided in an area encircled by the peripheral edge of the suction port N of the vacuum cleaner. The cover side through hole 32 includes a central side through hole 32a formed on the center of the corresponding portion 31a in an almost equal dimension to that of the deaeration port 22 of the base 2 and a peripheral side through hole 32b provided in four places to surround the central side through hole 32a. An airflow passing through the deaeration port 22 of the base 2 passes through the cover side through hole 32 and is discharged to the outside of the deaeration valve 1. A specific deaeration method will be described below.

On the other hand, a hook portion 34 protrudes from a lower surface of the cover 3 as shown in Figs. 5(B) and 5(C). Two hook portions 34 are provided every 180° with respect to a center of the upper surface 31 of the cover 3 as seen from a bottom as shown in Fig. 5(C).

The tip click portion 34a is formed inward on the tip of the hook portion 34. The tip click portion 34a is engaged with the engaging groove 24a formed on an outer peripheral surface in the sidewall 24 of the base 2 as described above. Consequently, the cover 3 can be rotated in the loosening and fastening directions against the base 2 corresponding to a range in the engaging groove 24a where the tip click portion 34a can be rotated. As shown in Fig. 3(B), the engaging groove 24a is inclined to a horizontal direction. For this reason, the cover 3 vertically moves to the base 2 to the rotation. As described above, when the engaging groove 24a of the base 2 is formed on an inner peripheral surface of the sidewall 24, the configuration of the hook portion 34 is also changed to be engageable with the engaging groove 24a.

The rotating range of the cover 3 with respect to the base 2 according to the example is set to be 90°. In other words, an angle at which the cover 3 is screwed into the base 2 is only 90°. In the deaeration valve 1 according to the example, it is not necessary to rotate the cover against to the base many times in order to screw the cover differently from the invention described in Patent Reference 1. An operation can be done more easily than one in the conventional art.

It is proper that the rotating range of the cover 3 is set to be 30° to 180°, and this is not restricted. For example, the base 2 has the screw portion 24a to be rotated circumferentially at 360° or more on the inner peripheral surface of the sidewall 24 as shown in Fig. 12, and the cover 3 has the screw thread 34b provided to be rotated circumferentially at 360° or more at the tip side in the outer peripheral surface of the hook portion 34 as shown in Fig. 13. When the base 2 and the cover are combined, the rotating range of the cover 3 against the base 2 may be set to be an angle that is equal to or greater than the angle described above and the cover 3 may carry out one or more times of rotation.

As shown in Fig. 5(C), a rotating support projection 36 protrudes in a position shifted from the hook portion 34 at 90° on the lower surface of the cover 3. In the example, the rotating support projection 36 is provided adjacently to the outer peripheral side of the pressing portion 33. The rotating support projection 36 is arranged on the inside of the internal surface of the sidewall 24 in the base 2 when the cover 3 is attached to the base 2 as shown in Fig. 14(C). Consequently, it is possible to rotate the cover 3 with respect to the base 2 without loosening.

As shown in Figs. 5 (B) and 5(C), the pressing portion 33 is formed to protrude downward from a lower surface which is close to a center from the hook portion 34 in the cover 3. The pressing portion 33 screws the cover 3 along the engaging groove 24a and can press, with moving downward, at least part of a peripheral edge portion of the valve body 4 as shown in Figs. 14(B) and 14(C). In the example, as shown in Fig. 5(C), the pressing portion 33 is set to be circular. In the example, four cross-shaped connecting portions 35 are provided every 90° with respect to the center of the upper surface 31 of the cover 3 on the inside of the pressing portion 33 as shown in Fig. 5 (C) and do not need to be always formed.

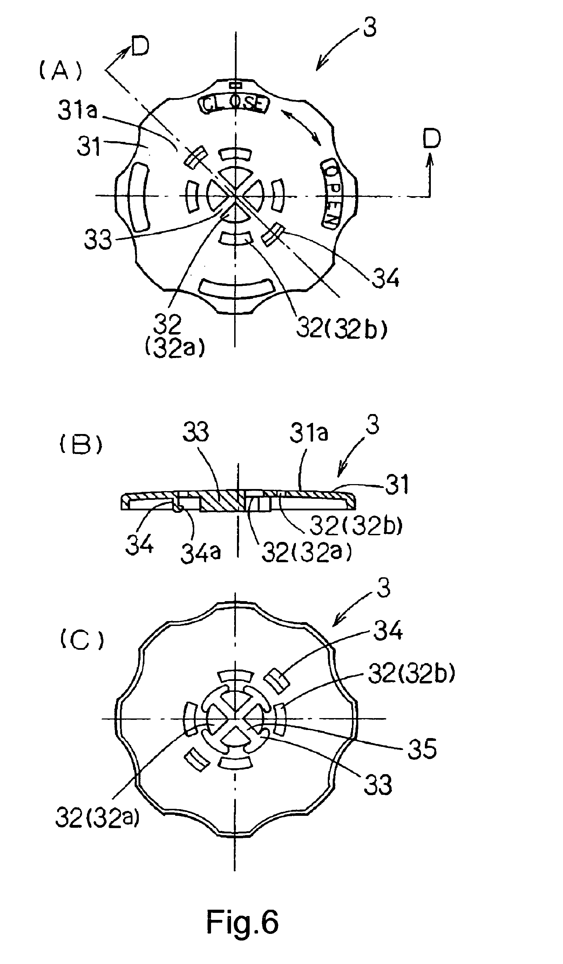

The configuration of the pressing portion 33 is not restricted to that in the example but four pressing portions 33 may be provided every 90° with respect to the center of the upper surface 31 of the cover 3 as seen from a bottom as shown in Fig. 6(C), for example, and the cross-shaped connecting portion 35 may be provided to connect the four pressing portions 33 as seen from the bottom. In this case, a clearance is present between the respective pressing portions 33. For this reason, all of the peripheral edge portions of the valve body 4 are not pressed. After the deaeration, however, the inner part of the compression bag B has a negative pressure and the valve body 4 is sucked onto the deaeration port 22 by the negative pressure because the valve body 4 is made of a soft material as will be described below. Even when the pressing portion 33 presses only part of the peripheral edge portions of the valve body 4 as in the example, there is no problem in respect of its function. Referring to the positional relationship between the pressing portion 33 and the base 2, which is obtained when the pressing portion 33 presses the valve body 4 in this case, the pressing portion 33 is positioned on the outer peripheral side of four areas of the deaeration port 22, which are divided by the rectifying plate 27. In other words, the pressing portion 33 presses the valve body 4 on just outside the deaeration port 22. The valve body 4 can be fixed reliably in a closed state.

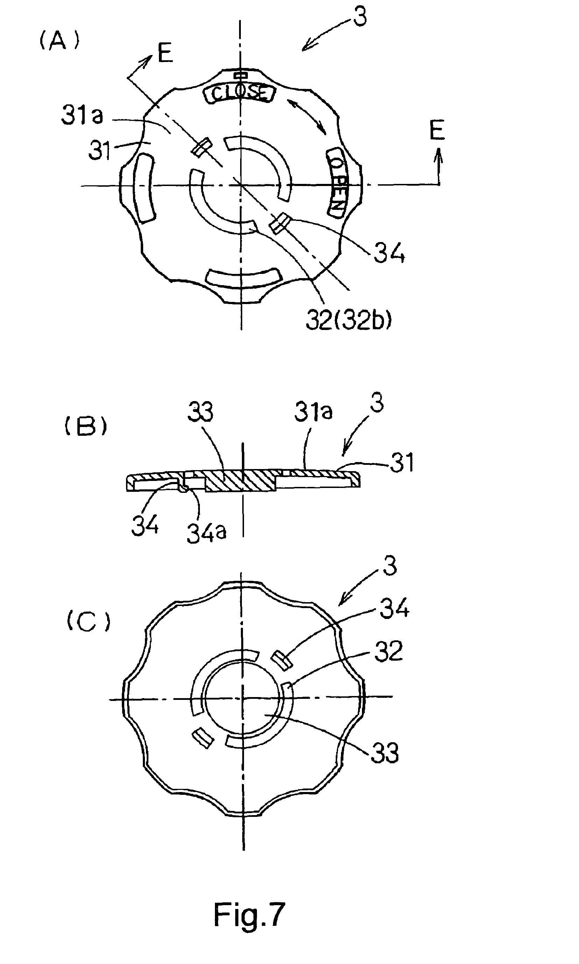

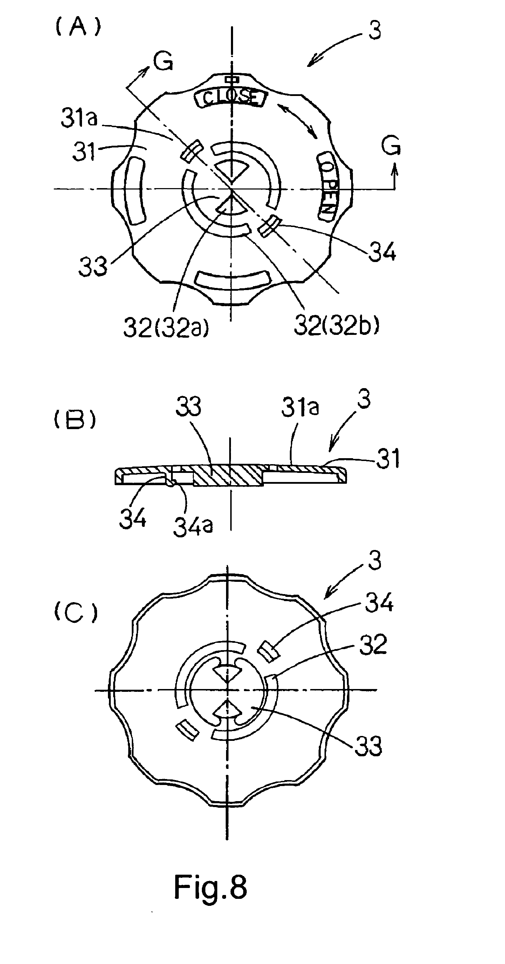

As shown in Fig. 7, the cylindrical pressing portion 33 may be formed to close the whole periphery of the valve body 4. As shown in Fig. 8, the pressing portion 33 may take such a configuration (shape of a dumbbell) that two of the central side through holes 32a interpose the center of the cover 3 therebetween. In these cases, the central side through hole 32a is not present at all in the cover 3 shown in Fig. 7 and the central side through hole 32a of the cover 3 shown in Fig. 8 has an opening area, which is half of the opening area of the central side through hole 32a of the cover 3 shown in Fig. 5. By providing the continuous peripheral side through hole 32b, an opening remains in deaeration.

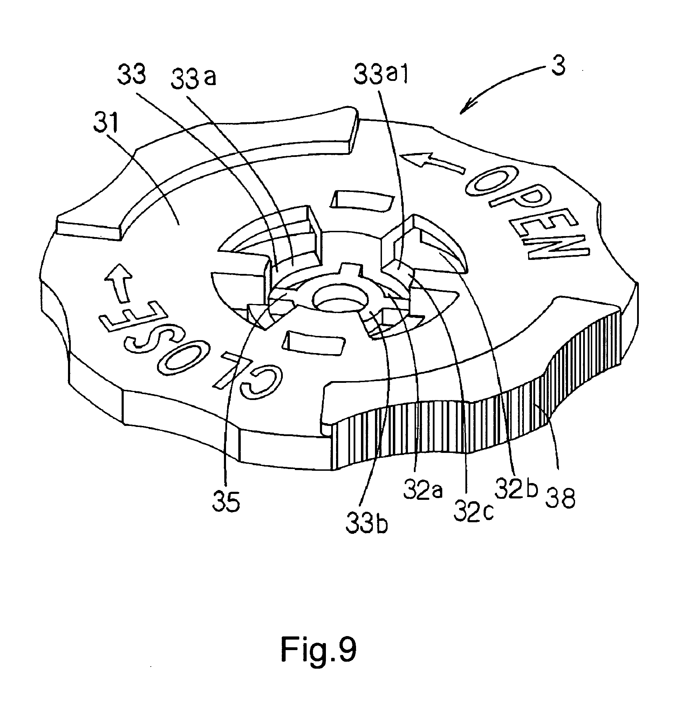

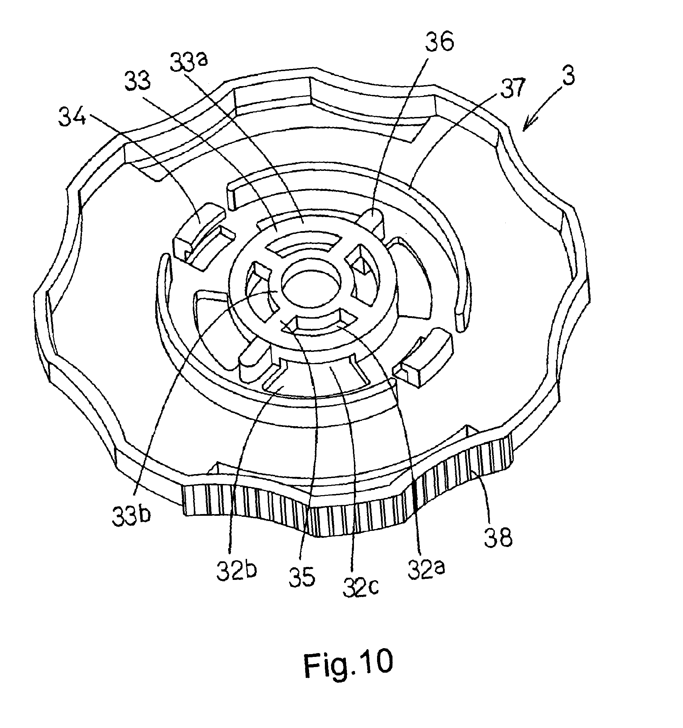

For the configuration of the pressing portion 33, in addition to the above description, there may be provided a pressing ring 33a having an upper end face 33a1 of the pressing portion 33 positioned lower than the upper surface 31 of the cover 3 as shown in Figs. 9 and 10. More specifically, as shown in Fig. 9, the central portion of the cover 3 is concaved. Alternatively, it may be recognized that the position of the lower end face of the pressing portion 33 in the cover 3 shown in Fig. 5 is not changed but the position of the upper end face is moved downward. In this case, the pressing ring 33a presses at least part of the peripheral edge portion of the valve body 4.

In this case, the central side through hole 32a in the cover side through hole 32 is provided on the pressing ring 33a. On the other hand, the peripheral side through hole 32b is provided around the central side through hole 32a in the same manner as in the example described above, that is, on the outside seen on a plane of the pressing ring 33a.

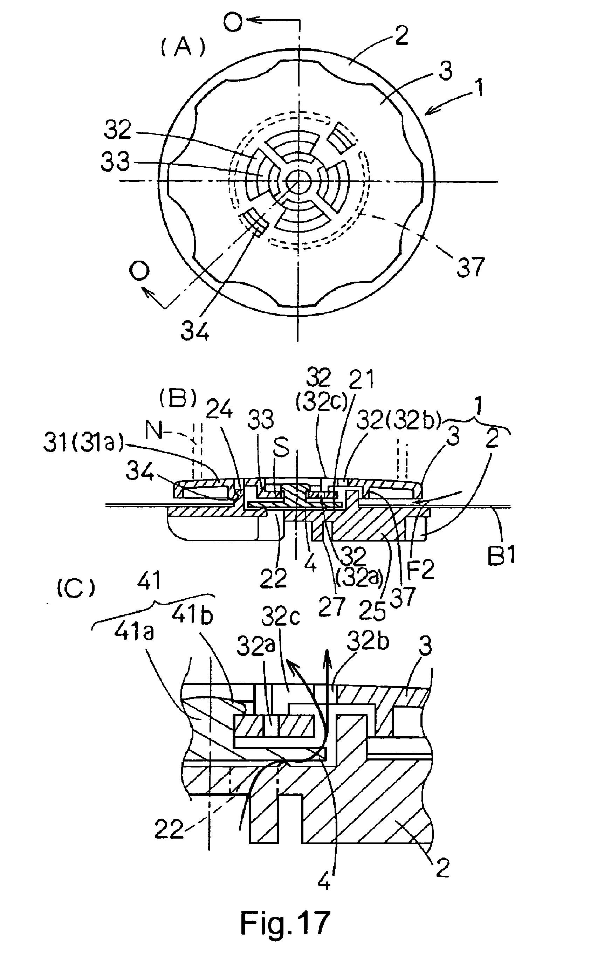

As described above, the upper end face 33a1 of the pressing ring 33a is positioned far below from the upper surface 31 of the cover 3. Therefore, the central side through hole 32a and the peripheral side through hole 32b are provided below the upper surface 31 of the cover 3 and a continuous space 32c is provided continuously below the upper surface 31 of the cover 3 and above the pressing ring 33a. By providing the continuous space 32c, an airflow passing through the deaeration port 22 of the base 2 can be caused to pass through the continuous space 32c besides the central side through hole 32a and the peripheral side through hole 32b in deaeration as shown in Fig. 17(C). Consequently, a ventilation area in the cover 3 increases, so that the deaeration can be done more quickly.

In this example, as will be described below, the pressing ring 33a has such a shape that a protruding portion 41 of the valve body 4 can be disposed. More specifically, the connecting portion 35 on the central side of the pressing ring 33a is ring-shaped as shown in the drawings, set to be a valve body support portion 33b. A relationship between the valve body support portion 33b and the valve body 4 will be described below.

Also in the example shown in Fig. 13, as shown in a broken line of Fig. 13(B), the valve body 4 including the protruding portion 41, which will be described below, is used. The valve body support portion 33b including a hole through which the protruding portion 41 of the valve body 4 is inserted is provided in a lower end part of the pressing portion 33 as shown in the drawing.

In the examples shown in Figs. 9 and 10, a ventilation preventing wall 37 is provided to protrude from the lower surface of the cover 3. The ventilation preventing wall 37, a portion of the lower surface of the cover 3 where the hook portion 34 is not provided, is a plate-shaped projection that is provided almost on the same level as the hook portion 34 in a position where it has an equal diameter to the diameter of the hook portion 34. A height of the ventilation preventing wall 37 can be set high enough, with the cover 3 being screwed onto the base 2 to close the deaeration valve 1, as long as the closure of the deaeration valve 1 is not disturbed by touching of the lower end of the ventilation preventing wall 37 and the upper surface of the attachment plate 23 of the base 2 (the surface of the bag sheet B1 attached onto the attachment plate 23 in the deaeration valve 1 which is attached to the compression bag B).

Consequently, the cover side through hole 32 (the central side through hole 32a, the peripheral side through hole 32b) and the pressing portion 33 are encircled outside in the circumferential direction by the hook portion 34 and the ventilation preventing wall 37 as shown in Fig. 17 (A). Although a clearance is provided between the hook portion 34 and the ventilation preventing wall 37 (see Fig. 10) in this example, both the hook portion 34 and the ventilation preventing wall 37 may be formed integrally without a clearance. The ventilation preventing wall 37 may be formed outside the hook portion 34 in the circumferential direction.

Next, description will be given to the effects of the ventilation preventing wall 37. When the cover 3 is loosened against the base 2 and moves upward most, and the suction port N of the vacuum cleaner is pressed against the corresponding portion 31a of the cover 3 to discharge air in the bag through the deaeration port 22 as shown in Fig. 17(B), an unfavorable airflow F2 entering from the periphery of the cover 3, passing between the cover 3 and the bag sheet B1, flowing over the sidewall 24 and reaching the cover side through hole 32, is generated in addition to the first airflow through the deaeration port 22. The unfavorable airflow F2 is a factor to impede the deaeration that is to be done from the deaeration port 22. The ventilation preventing wall 37 is formed to protrude downward from the lower surface of the cover 3 outside the sidewall 24 in the base 2 in the circumferential direction. The unfavorable airflow F2 can be blocked to some extent. By the presence of the ventilation preventing wall 37, the deaeration can be done intensively from the inherent deaeration port 22 so that quick deaeration can be done.

In order to effectively block the unfavorable airflow F2 as described above, it is desirable that the internal surface of the ventilation preventing wall 37 have a diameter that is greater than the diameter of the outer surface of the sidewall 24 of the base 2 and in which the internal wall of the ventilation preventing wall 37 and the outer surface of the sidewall 24 of the base 2 approach each other without an interference.

It is desirable that at least the ventilation preventing wall 37 be, in the circumferential direction on the cover 3, provided in a manner to intervene in the space where the cover side through hole 32 extends outward in the radial direction.

Even when the ventilation preventing wall 37 is formed as described above, with the airflow F2 perfectly blocked, there is a possibility that a motor is not overloaded so as to be damaged if the vacuum cleaner keep sucking even after deaeration in the bag is finished. In the worst case, there is also a possibility that an ignition accident might be caused. Accordingly, when the cover 3 is loosened, it is desirable that the ventilation preventing wall 37 take such a shape as to make a clearance between the ventilation preventing wall 37 and the attachment plate 23, while the airflow F2 leaves imperfectly blocked and passes through after the deaeration in the bag is finished.

In the examples shown in Figs. 9 and 10, the ventilation preventing wall 37 is provided to protrude downward from the lower surface of the cover 3. If the unfavorable airflow F2 can be blocked as described above, however, the ventilation preventing wall 37 may be provided to protrude upward from the attachment plate 23 of the base 2.

It is possible to carry out the invention by variously changing the shape of the outer periphery of the cover 3. For example, a plurality of fine convexities 38 may be provided as a non-slip member as shown in Figs. 9 and 10.

The valve body 4 is disposed in a valve body housing chamber S enclosed by the diaphragm 21 of the base 2 and the cover 3. In the examples shown in Figs. 14 and 15, the whole valve body 4 is disposed in the valve body housing chamber S. The valve body housing chamber S is defined by the sidewall 24, the diaphragm 21, and the lower end of the pressing portion 33 of the cover 3 in detail. The valve body 4 in this example is disposed in the valve body housing chamber S in such a free state that it is not fixed to the base 2 or the cover 3 nor is not forced by an elastic member described in Patent Reference 1 (Japanese Laid-Open Utility Model Publication No. H5-44837). When the cover 3 is loosened as described above, the valve body 4 can vertically move in the valve body housing chamber S. When the deaeration valve 1 is attached to the compression bag B, a portion protruding from the compression bag B can be smaller due to the presence of the elastic member.

Referring to the configuration of the valve body 4 seen on a plane, the invention can be carried out in various configurations such as a circular shape or a polygonal shape as long as the valve body 4 can vertically move in the valve body housing chamber S as described above when the cover 3 is loosened. The configuration may be defined to substantially comfort to the dimension of the inner peripheral surface of the sidewall 24 on the base 2 without substantial horizontal movement of the valve body. Or the configuration may allow the valve body to horizontally move in the valve body housing chamber S. However, it is a condition that the whole deaeration port 22 can be closed and the closure of the deaeration port 22 is not hindered even when the valve body 4 is horizontally shifted. The valve body 4 in the example shown in Fig. 14 takes an elliptical shape. A major axis is set to be 24 mm and a minor axis is set to be 20 mm.

A vertical dimension of the valve body housing chamber S is set to be smaller than at least a minimum dimension passing through the center of the valve body 4 in the horizontal dimension of the valve body 4 (the minor axis of the ellipse in the example). Being plate-shaped as in the example, the valve body 4 does not turn over in the valve body housing chamber S, and functions reliably. In the example, the vertical dimension of the valve body housing chamber S is set to be equal to or smaller than 6 mm, and is greater than thickness of the valve body 4. In suction done by the vacuum cleaner, the motor of the vacuum cleaner is not overloaded. Thus, sure safety can be obtained.

The valve body 4 is made of soft resin such as rubber, and the suction port N of the vacuum cleaner is caused to abut on the corresponding portion 31a of the cover 3 to do suction so that the valve body 4 is sucked toward the cover 3 side and can be released from the deaeration port 22. For the valve body 4 in the example shown in Fig. 14, a rubber sheet having thickness of 0.6 mm is used. As described above, the valve body 4 is disposed in a free state in the valve body housing chamber S and can move freely in the valve body housing chamber S. Therefore, a time lag in the movement of the valve body 4 does not occur in suction so that the deaeration can be done quickly. After the suction is finished, the valve body 4 quickly contacts the deaeration port 22 by difference of pressure between a negative pressure in the compression bag B and a positive pressure outside. Even when the cover 3 is not fastened onto the base 2 as shown in Fig. 15(B), the deaerated state in the compression bag B is kept. When the cover 3 is further fastened, the valve body 4 is pressed downward by the pressing portion 33 of the cover 3 as shown in Fig. 14 (B), thus being fixed and keeping the deaeration port 22 closed.

Referring to the base 2, a guide portion 28 also can be formed along at least part of the inner peripheral surface of the sidewall 24 as shown in Figs. 4(A) and 4(B). The guide portion 28 stands upward from the diaphragm 21 and an inner peripheral surface thereof controls the horizontal movement of the valve body 4. In this case, the valve body housing chamber S is also defined by the guide portion 28 together with the sidewall 24, the diaphragm 21 and the lower end of the pressing portion 33.

Two guide portions 28 shown in Figs. 4(A) and 4(B) are provided every 180° with respect to the center of the attachment plate 23 as seen on a plane. A clearance portion 29, being a space along the inner peripheral surface of the sidewall 24, is formed between the guide portions 28. With the valve body 4 being released from the deaeration port 22, an airflow passing through the deaeration port 22 can reach the peripheral side through hole 32b in the cover side through hole 32 of the cover 3 in a portion where the clearance portion 29 is provided as shown in Fig. 15(B). Thus, the deaeration can be done more smoothly than the case in which the clearance portion 29 is not provided.

Although the upper surface of the guide portion 28 shown in Figs. 4(A) and 4(B) is a horizontal plane, it may be an inclined surface. A member to abut on the upper surface of the guide portion 28 may be provided on the cover 3 side. The click projection 24b may be provided on the upper and internal surfaces of the guide portion 28. In addition, three or more guide portions 28 may be provided, and the number of the clearance portions 29 may be increased correspondingly, and the invention can be thus carried out in various configurations.

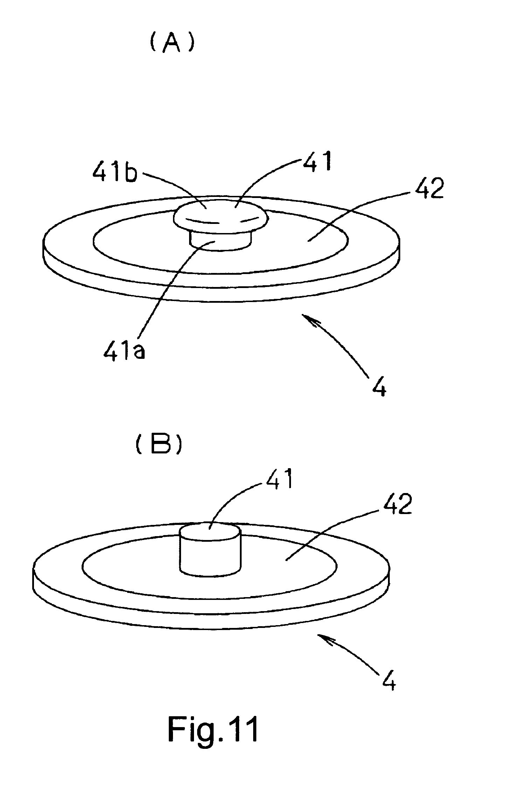

Although the valve body 4 described above is plate-shaped, it can also include the protruding portion 41 that protrudes upward from the plate-shaped body portion 42 as shown in Fig. 11. As described above, the protruding portion 41 is disposed to be vertically movable in the valve body support portion 33b, which is provided on the pressing ring 33a of the cover 3. When the valve body 4 takes such a shape, the body portion 42 is disposed in a free state in the valve body housing chamber S.

The protruding portion 41 is provided on a center of the body portion 42 in the valve body 4 as shown in Fig. 11(A). A middle part 41a thereof has a circular section, a diameter of which is slightly smaller than an inner diameter of the valve body support portion 33b, which is formed circularly too. A vertical dimension of the middle part 41a is set to be greater than a vertical dimension of the valve body support portion 33b. A tip part 41b of the protruding portion 41 is formed to be greater than the inner diameter of the valve body support portion 33b. Therefore, the valve body 4 attached to the valve body support portion 33b does not slip off and can move vertically within a range of the vertical direction of the middle part 41a.

When the valve body 4 is disposed in part of the cover 3, the valve body 4 can be set to be hardly shifted in a transverse direction, so that the valve body 4 (particularly, the body portion 42) can move stably.

Even when the protruding portion 41 is provided on the valve body 4, the protruding portion 41 may be set to have a certain diameter without providing the tip part 41b that has an enlarged diameter as shown in Fig. 11 (B). In this case, the vertical motion of the valve body 4 (particularly, the body portion 42) is defined by the vertical dimension of the valve body housing chamber S, that is, a distance between the diaphragm 21 and the lower end of the pressing portion 33.

While the valve body 4 having a configuration in which the protruding portion 41 is provided is used in combination with the cover 3 including the valve body support portion 33b formed like a ring as shown in Figs. 9 and 10. It is also possible to combine the cover 3 including the valve body support portion 33b with the plate-shaped valve body 4 that is not provided with the protruding portion 41.

As shown in Fig. 1, the deaeration valve 1 having a structure described above is used in attachment to the compression bag B in which a bag sheet B1 made of flexible resin is stuck around its circumference by a means such as heat seal, and a hermetically sealable space is formed therein. The compression bag B is provided with an opening portion B2 for inserting /taking out an item to be stored, and the opening portion B2 is provided with a fastener B3, which can close airtight.

In use of the compression bag B, the item is stored inside and the fastener B3 is then closed. The cover 3 is loosened against the base 2 of the deaeration valve 1 in this state, and the suction port N of the vacuum cleaner is pressed against the corresponding portion 31a of the cover 3 to discharge air in the bag through the deaeration port 22 as shown in Fig. 15 (B) . After deaeration, the valve body 4 and the deaeration port 22 contact each other by difference of the pressure between inside and outside of the bag. Therefore, the deaerated state can be kept. In order to keep the deaerated state more reliably, the cover 3 is screwed onto the base 2, and the valve body 4 is forcibly pressed against the deaeration port 22 by the pressing portion 33 of the cover 3 as shown in Fig. 14 (B) . Consequently, the deaerated state can be kept for a long period of time.

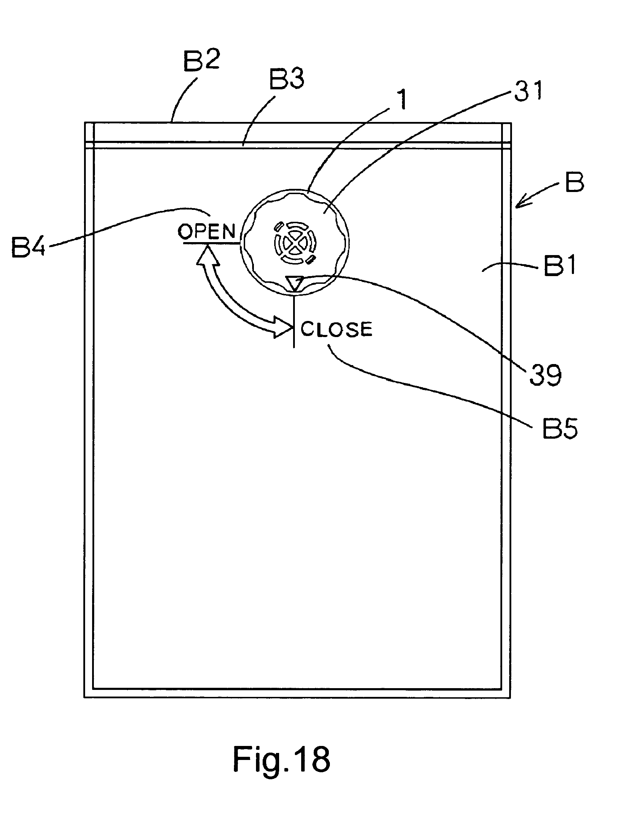

As shown in Fig. 18, it is also possible to provide, through printing, a display indicative of the opened/closed state of the deaeration valve 1 on the surface of the compression bag B. An opening degree indicating portion 39 such as an arrow is provided on the upper surface 31 of the cover 3 in the deaeration valve 1. An opening position display portion B4 is provided on the surface of the bag sheet B1 in the position where the opening degree indicating portion 39 conforms when the deaeration valve 1 is opened, while a closed position display portion B5 is provided on the surface of the bag sheet B1 in the position where the opening degree indicating portion 39 conforms when the deaeration valve 1 is closed. The opening degree indicating portion 39 is not limited to the upper surface 31 of the cover 3 as in the example shown in the drawings but may be provided in other positions on the surface of the cover 3, for example, on the side surface thereof in order for a user of the compression bag B to see the indication easily. The opening degree indicating portion 39 may be formed at the same time when the cover 3 is molded or may be separately provided with a sticker or coating. Thus, the formation can be executed through various means. Referring to the opening position display portion B4 and the closing position display portion B5, the formation can be similarly executed through various means such as provision of a sticker.

When the opening degree indicating portion 39 and the display means B4 and B5 are provided as described above, users of the compression bag B can confirm the opened/closed state of the deaeration valve 1 at a glance, and it is possible to implement the compression bag B with high usability.

The present invention has the following excellent effects. First, an aspect of the invention according to claim 1 provides a deaeration valve for a compression bag in which the valve body housing chamber S is defined by the sidewall 24, the diaphragm 21 and the lower end of the pressing portion 33 of the cover 3, and the valve body 4 has at least a part thereof disposed in the valve body housing chamber S in such a free state that it is not fixed to the base 2 or the cover 3 nor is not forced by the elastic member. A portion protruding from the compression bag due to the presence of an elastic member or the like can be decreased, and it is possible to do a quick deaeration without a time lag in the movement of the valve body 4 in suction by the vacuum cleaner.

In addition to the effect described above, an aspect of the invention according to claim 2 provides a deaeration valve for a compression bag in which a vertical direction of the valve body housing chamber S is at least smaller than the minimum dimension passing through the center of the valve body 4 among horizontal directions of the valve body 4, so that it is possible to carry out a reliable function of the valve body 4 without turning over.

In addition to the effect of the invention according to claim 1 or 2, an aspect of the invention according to claim 3 provides a deaeration valve for a compression bag having a comparatively simple structure in which only the base 2, the cover 3 and the valve body 4 are provided.

In addition to the effect of the invention according to claim 1 or 2, an aspect of the invention according to claim 4 provides a ventilation preventing wall 37. Consequently, it is possible to block the unfavorable airflow F2 entering from the circumference of the cover 3, flowing over the sidewall 24 and reaching the cover side through hole 32 to some extent. By the presence of the ventilation preventing wall 37, it is possible to do deaeration intensively through the inherent deaeration port 22, thereby performing quick deaeration.

An aspect of the invention according to claim 5 provides the ventilation preventing wall 37 in a manner to protrude downward from the lower surface of the cover 3, and the lower surface of the cover 3 has such a height not to disturb the closure of the deaeration valve 1 in screwing the cover 3 onto the base 2. In the circumferential direction on the cover 3, the ventilation preventing wall 37 is provided in a manner at least to intervene in the space where the cover side through hole 32 extends outward in the radial direction. Consequently, the ventilation preventing wall 37 can block the unfavorable airflow F2 more effectively without inhibiting the original function of the deaeration valve.

In addition to the effect of the invention according to claim 1 or 2, an aspect of the invention according to claim 6 provides a deaeration valve for a compression bag in which an upper end face 33al of the pressing ring 33a is positioned lower than the upper surface 31 of the cover 3, and the central side through hole 32a and the peripheral side through hole 32b are positioned lower than the upper surface 31 of the cover 3, and, further has the continuous space 32c that is continuously provided above the pressing ring 33a. Airflow can be caused to pass through the continuous space 32c as well as the central side through hole 32a and the peripheral side through hole 32b in deaeration, so that a ventilation area increases and the deaeration can be done more quickly.

In addition to the effect of the invention according to claim 6, an aspect of the invention according to claim 7 provides the deaeration valve for a compression bag in which the protruding portion 41 of the valve body 4 is disposed to be vertically movable in the valve body support portion 33b of the cover 3. Consequently, the valve body 4 is set to be hardly shifted in a transverse direction, so that the valve body 4 can move stably.

An aspect of the invention according to claim 8 provides a compression bag having the effect of the invention according to any of claims 1 to 7.

In addition to the effect of the invention according to claim 8, an aspect of the invention according to claim 9 provides the compression bag B in which the opening degree indicating portion 39 is provided on the deaeration valve 1, and the opening position display portion B4 and the closing position display portion B5 are provided on the bag sheet B1. Users of the compression bag B can confirm the opened/closed state of the deaeration valve 1 at a glance, and can use the compression bag B more easily.

## Claims

1. A deaeration valve for a compression bag, comprising:
a base (2) having a screw portion (24a) and serving as a deaeration port of a compression bag (B) in attachment to a through hole provided on the compression bag (B);
a cover (3) screwed onto the screw portion (24a) and thus attached to an upper side of the base (2); and
a valve body (4) formed separately from the base (2) and the cover (3),
the base (2) being provided with a diaphragm (21) for blocking the inside and outside of the compression bag (B), the diaphragm (21) being provided with a deaeration port (22) for communicating the inside and outside of the compression bag (B),
the cover (3) having a corresponding portion (31a) on the upper surface (31) to abut on a suction port (N) of the vacuum cleaner, the corresponding portion (31a) including a cover side through hole (32) communicating with an inner part of the cover (3) in the area encircled by a peripheral edge of the suction port (N) of the vacuum cleaner with the suction port (N) being pressed,
the valve body (4) having at least a part thereof disposed in a valve body housing chamber (S) encircled by the diaphragm (21) of the base (2) and the cover (3), and being capable of being sucked toward the deaeration port (22) by a negative pressure in the compression bag (B) to close the deaeration port (22) from the upper side,
with the cover (3) being loosened and moving upward, the valve body (4) being sucked toward the cover (3) side by suction of the vacuum cleaner then releasing from the deaeration port (22),
with the cover (3) being fastened and moving downward, the valve body (4) keeping the deaeration port (22) closed,
wherein the screw portion (24a) is formed on a sidewall (24) provided to protrude upward on the base (2), and
a pressing portion (33) is provided on the lower surface of the cover (3) for pressing the valve body (4) while screwing the cover (3),and
the valve body housing chamber (S) is defined by the sidewall (24), the diaphragm (21) and the lower end of the pressing portion (33) of the cover (3), and
a part of the valve body (4) is disposed in the valve body housing chamber (S) with the valve body (4) being in such a free state that the valve body (4) is not fixed to the base (2) or the cover (3) nor is not forced by an elastic member, and
when the cover (3) is loosened, the part of the valve body (4) is vertically movable in the valve body housing chamber (S), and the deaeration port (22) can be totally closed even when the valve body (4) horizontally moves.

2. The deaeration valve for a compression bag according to claim 1, wherein, with the cover (3) being loosened, a vertical dimension of the valve body housing chamber (S) is at least smaller than the minimum dimension passing through the center of the valve body (4) among horizontal dimensions of the valve body (4).

3. The deaeration valve for a compression bag according to claim 1 or 2, wherein the deaeration valve is constituted by only the base (2), the cover (3) and the valve body (4).

4. The deaeration valve for a compression bag according to claim 1 or 2, wherein a ventilation preventing wall (37) is provided in the circumferential direction outside the deaeration port (22) of the base (2) and the cover side through hole (32) of the cover (3), further, in the circumferential direction outside the sidewall (24) of the base (2) with the cover (3) attached to the base (2).

5. The deaeration valve for a compression bag according to claim 4, wherein the ventilation preventing wall (37) is provided to protrude downward from the lower surface of the cover (3), its height from the lower surface of the cover (3) being set high enough not to disturb the closure of the deaeration valve (1) in screwing the cover (3) onto the base (2), and
the ventilation preventing wall (37) is, in the circumferential direction on the cover (3), provided in a manner at least to intervene in the space where the cover side through hole (32) extends outward in the radial direction.

6. The deaeration valve for a compression bag according to claim 1 or 2, wherein the pressing portion (33) of the cover (3) has a pressing ring (33a), an upper end face (33a1) of the pressing ring (33a) being positioned lower than the upper surface (31) of the cover (3), and
the cover side through hole (32) is comprised of a central side through hole (32a) provided in the pressing ring (33a) and a peripheral side through hole (32b) provided outside seen on a plane of the pressing ring (33a), the central side through hole (32a) and the peripheral side through hole (32b) being positioned lower than the upper surface (31) of the cover (3), further, the cover side through hole (32) having a continuous space (32c) continuously provided above the pressing ring (33a).

7. The deaeration valve for a compression bag according to claim 6, wherein the valve body (4) includes a protruding portion (41) that protrudes upward, and
a valve body support portion (33b) is provided on the pressing ring (33a) of the cover (3), and
the protruding portion (41) is disposed to be vertically movable in the valve body support portion (33b).

8. A compression bag (B) in which a bag sheet (B1) made of a flexible resin is stuck to form a space that can be hermetically sealed thereinside,
wherein the deaeration valve (1) for a compression bag according to any of claims 1 to 7 is attached to the bag sheet (B1), so that air in the space can be discharged through a deaeration port (22) of the deaeration valve and the deaerated state can be kept.

9. The compression bag according to claim 8, wherein an opening degree indicating portion (39) is provided on a surface of the cover (3) of the deaeration valve (1),
an opening position display portion (B4) is provided in a position of the bag sheet (B1) where the portion (B4) conforms to the opening degree indicating portion (39) in an opened state of the deaeration valve (1), and
a closing position display portion (B5) is provided in a position where the portion (B5) conforms to the opening degree indicating portion (39) in a closed state of the deaeration valve (1).
